# EUROPÄISCHE PATENTANMELDUNG

(11) **EP 2 343 518 A1**
(43) Veröffentlichungstag der Anmeldung: **13.07.2011**
(21) Anmeldenummer: 10193662.3
(22) Anmeldetag: 03.12.2010
(51) Int. Cl.: G01F 23/24, B67C 3/28

(54) **Messsonde zum Bestimmen eines Füllstandes einer Flüssigkeit**

(30) Priorität: 23.12.2009 DE 102009055292
(71) Anmelder: Krones AG, 93073 Neutraubling (DE)
(72) Erfinder: Angerer, Florian, 93104, Riekofen (DE)
(74) Vertreter: Grünecker, Kinkeldey, Stockmair & Schwanhäusser Anwaltssozietät

(57) **Zusammenfassung**

Die Erfindung umfasst eine Messsonde zum Bestimmen eines Füllstandes einer Flüssigkeit in einem Gefäß, insbesondere einer Flasche oder einer Dose, umfassend wenigstens drei voneinander elektrisch isolierte, an der Oberfläche der Messsonde nach außen weisende Elektroden, wobei die Messsonde als massive Stabsonde ausgebildet ist.

## Beschreibung

Die Erfindung betrifft eine Messsonde zum Bestimmen eines Füllstandes einer Flüssigkeit in einem Gefäß, insbesondere in einer Flasche oder in einer Dose.

Beim Abfüllen von Flüssigkeiten in Gefäße wird häufig eine hohe Füllgeschwindigkeit bei präziser Füllmenge angestrebt. Um dies zu erreichen werden häufig Messsonden zum Bestimmen des Füllstandes der Flüssigkeit während des Befüllens verwendet.

Beispielsweise in der Getränkeindustrie wird mit Hilfe einer Messsonde die Füllung in zwei Geschwindigkeitsberichte unterteilt. Zunächst wird bis zum Erreichen einer vorher definierten Füllhöhe mit einer hohen Geschwindigkeit gefüllt. Nach Erreichen dieser Füllhöhe wird die Füllgeschwindigkeit reduziert und das Gefäß wird mit einer langsameren Füllgeschwindigkeit weiter gefüllt. Beim Erreichen einer zweiten vorherbestimmten Füllhöhe wird die Füllung beendet.

Um die Füllzeit möglichst gering zu halten, müssen die Füllhöhen möglichst exakt ermittelt werden. Ein zu frühes Umschalten auf eine langsame Füllgeschwindigkeit hat zur Folge, dass das zu füllende Restvolumen relativ groß ist und aufgrund des Umschaltens auf eine langsamere Füllgeschwindigkeit die gesamte Dauer der Füllung zunimmt. Ein zu spätes Umschalten auf eine langsame Füllgeschwindigkeit, so dass bis in den Flaschenhals mit einer hohen Füllgeschwindigkeit gefüllt wird, kann zu einem erhöhten Nachlauf und damit zu einer überfüllten Flasche führen.

Eine aus dem Stand der Technik bekannte Sonde umfasst zwei durch ein Isolierstück getrennte Elektroden. Die obere der beiden Elektroden ist dabei üblicherweise mit der Maschinenmasse verbunden, während die zweite, untere Elektrode, ein davon unterschiedliches elektrisches Potential aufweist.

Die Füllhöhe, bei der die Füllung gestoppt wird, wird bei einer derartigen Messsonde so bestimmt, dass ein Stromfluss zwischen den beiden Elektroden durch eine Auswerteelektronik bestimmt wird, wenn die Flüssigkeit eine leitende Verbindung zwischen den beiden Elektroden herstellt.

Um auch eine vorherige Umschaltung auf eine langsamere Füllgeschwindigkeit zu realisieren, wird der Eintauchpunkt der unteren Elektrode durch einen Stromfluss zwischen der unteren Elektrode und der Maschinenmasse über einen sogenannten Produktschirm bestimmt. Ein Produktschirm entsteht, wenn bei der Füllung des Gefäßes das Produkt aufgrund der Verwendung z.B. eines Drallkörpers an der inneren Flaschenoberfläche in die Flasche läuft.

Dieser Stromfluss zwischen der unteren Elektrode und der Maschinenmasse über den Produktschirm kann von der Auswerteelektronik erkannt werden. Allerdings ist die Amplitude dieses Stromflusses wesentlich geringer als die Amplitude, die bei einem Stromfluss zwischen den beiden Elektroden über die Flüssigkeit entsteht.

Ändert sich die Leitfähigkeit der Flüssigkeit, so können diese Schwankungen die Erkennung des Eintauchens der unteren Elektrode in die Flüssigkeit negativ beeinflussen. Dies kann dazu führen, dass entweder zu früh oder zu spät auf eine langsame Geschwindigkeit umgestellt wird, was zu einer längeren Fülldauer oder einem überfüllten Gefäß führt.

Daher ist es Aufgabe der vorliegenden Erfindung, eine einfache Messsonde bereitzustellen, die eine präzise Messung von wenigstens zwei unterschiedlichen Füllhöhen ermöglicht. Diese Aufgabe wird durch eine Messsonde gemäß Patentanspruch 1 gelöst.

Die erfindungsgemäße Messsonde zum Bestimmen eines Füllstandes einer Flüssigkeit in einem Gefäß, insbesondere einer Flasche oder einer Dose, umfasst wenigstens drei voneinander elektrisch isolierte, an der Oberfläche der Messsonde nach außen weisende Elektroden, wobei die Messsonde als massive Stabsonde ausgebildet ist.

Durch das Vorsehen von drei Elektroden können ein erster Füllstand durch einen Stromfluss zwischen einem ersten Paar von Elektroden und ein zweiter Füllstand durch einen Stromfluss zwischen einem zweiten Paar von Elektroden bestimmt werden. Da der Stromfluss zwischen je zwei Elektroden der Messsonde besser bestimmt werden kann als ein Stromfluss zwischen einer Elektrode und der Maschinenmasse über einen Produktschirm, erlaubt die Messsonde daher eine präzisiere Bestimmung von wenigstens zwei Füllhöhen.

Die Messsonde kann beispielsweise beim Abfüllen einer Flüssigkeit in ein Gefäß, beispielsweise in eine Flasche oder in eine Dose, verwendet werden. Das Erreichen des ersten beziehungsweise des zweiten Füllstandes kann dann einem Umschaltzeitpunkt beziehungsweise einem Abschaltzeitpunkt der Füllung zugeordnet werden. Dadurch kann ein verbesserter Abfüllvorgang erreicht werden.

Massiv bedeutet in diesem Zusammenhang, dass die Stabsonde nicht hohl beziehungsweise rohrförmig ist.

Die Messsonde kann in einer Richtung eine größere Längenausdehnung aufweisen, als in den Richtungen senkrecht zu dieser Richtung. Die Richtung, in welcher die Messsonde die größte Längenausdehnung aufweist, kann als Längsrichtung oder Längsachse der Messsonde bezeichnet werden.

Die Messsonde kann prinzipiell in unterschiedlichsten Geometrien ausgebildet sein. Beispielsweise kann die Messsonde zylindrisch, konisch oder teils zylindrisch und teils konisch ausgebildet sein.

Die nach außen weisenden Elektroden können mit der Oberfläche der Messsonde fluchtend oder als Erhebungen oder Vertiefungen in der Oberfläche der Messsonde ausgebildet sein.

Die nach außen weisenden Elektroden können insbesondere an der Oberfläche freiliegende Elektrodenflächen umfassen. Dadurch kann eine Flüssigkeit, deren Füllstand bestimmt werden soll, die Elektroden unmittelbar beziehungsweise direkt kontaktieren.

Die nach außen weisenden Elektroden können insbesondere im Bereich der Mantelfläche der Messsonde angeordnet sein. Über eine Deckfläche der Messsonde kann dann ein leitender Kontakt zu einem externen Element, beispielsweise zu einer externen Spannungsquelle, hergestellt werden.

Die Elektroden, bevorzugt aus Edelstahl gefertigt, können durch Isolierschichten aus elektrisch isolierendem Material voneinander getrennt sein. Bevorzugt wird die Isolierschicht aus einem nicht-leitenden, chemisch widerstandsfähigen Kunststoff hergestellt, z.B. Halar oder PEEK. Diese Materialauswahl führt zu einer hohen mechanischen Festigkeit sowie einer augezeichneten Beständigkeit gegenüber aggressiven Reinigungs- oder Desinfektionsmitteln, wie sie in der Abfüllpraxis eingesetzt werden.

Wenigstens eine der Elektroden und/oder eine der Isolierschichten können mittels Dünnschichttechnologie auf die Messsonde aufgebracht worden sein. Beispielsweise können wenigstens eine der Elektroden und/oder eine der Isolierschichten mittels physikalischer oder chemischer Gasphasenabscheidung auf die Messsonde aufgebracht worden sein.

Wenigstens zwei der Elektroden können teilweise im Inneren der Messsonde angeordnet sein, wobei insbesondere die Ausdehnung der wenigstens zwei Elektroden in Richtung der Längsachse der Messsonde im Inneren größer ist als an der Oberfläche.

Der innere Teil der wenigstens zwei Elektroden kann an der Oberseite der Messsonde eine freiliegende, nach außen weisende Oberfläche aufweisen. In diesem Fall kann an die Elektroden von außen ein vorherbestimmtes Potential angelegt werden.

Im Betrieb der Messsonde können wenigstens zwei der Elektroden voneinander unterschiedliche elektrische Potentiale aufweisen. Insbesondere können alle Elektroden voneinander unterschiedliche elektrische Potentiale aufweisen. Insbesondere kann eine der Elektroden mit der Maschinenmasse verbunden sein.

Die Elektroden können an der Oberfläche der Messsonde entlang der Längsachse der Messsonde beabstandet voneinander angeordnet sein. Durch den Abstand der Elektroden an der Oberfläche kann die Differenz zwischen den messbaren Füllhöhen bestimmt werden.

Die Erfindung stellt außerdem eine Vorrichtung zum Bestimmen eines Füllstandes einer Flüssigkeit in einem Gefäß, insbesondere einer Flasche oder einer Dose, bereit, umfassend eine oben beschriebene Messsonde und ein Auswerteelement zum Bestimmen eines Stromflusses zwischen zwei der Elektroden der Messsonde.

Die Vorrichtung kann außerdem Verbindeelemente zum Verbinden der Messsonde, insbesondere der Elektroden der Messsonde, mit dem Auswerteelement und/oder einer externen Spannungsquelle umfassen.

Das Auswerteelement kann insbesondere zwei Eingänge umfassen, über welche ein Stromfluss zwischen je einem Paar von Elektroden der Messsonde bestimmt werden kann.

Mit anderen Worten kann das Auswerteelement derart konfiguriert sein, dass es einen elektrischen Strom zwischen je zwei Elektroden der Messsonde bestimmen kann. Insbesondere kann das Auswerteelement derart konfiguriert sein, dass es einen elektrischen Strom zwischen einem ersten Paar von Elektroden der Messsonde und einem zweiten Paar von Elektroden der Messsonde bestimmen kann.

Die Messsonde kann eines oder mehrere der oben genannten Merkmale aufweisen.

Die Vorrichtung kann insbesondere eine externe Spannungsquelle umfassen, die insbesondere derart ausgebildet ist, dass an wenigstens zwei der Elektroden eine voneinander unterschiedliche elektrische Spannung angelegt werden kann.

Die Erfindung stellt außerdem ein Verfahren zum Bestimmen eines Füllstandes einer Flüssigkeit in einem Gefäß, insbesondere einer Flasche oder einer Dose, bereit, umfassend die Schritte Bereitstellen einer oben beschriebenen Vorrichtung und Bestimmen einer Füllhöhe umfassend Bestimmen eines Stromflusses zwischen einer ersten und einer zweiten Elektrode der bereitgestellten Messsonde.

Die Erfindung stellt außerdem ein Verfahren zum Abfüllen einer Flüssigkeit in ein Gefäß, insbesondere eine Flasche oder eine Dose, bereit, wobei eine Abfüllanlage umfassend eine oben beschriebene Vorrichtung bereitgestellt wird, umfassend die Schritte Befüllen des Gefäßes mit einer ersten Füllgeschwindigkeit, Bestimmen einer ersten Füllhöhe umfassend Bestimmen eines Stromflusses zwischen einer ersten und einer zweiten Elektrode der bereitgestellten Messsonde, Verändern der Füllgeschwindigkeit zu einer zweiten Füllgeschwindigkeit bei Erreichen der ersten Füllhöhe, Bestimmen einer zweiten Füllhöhe umfassend Bestimmen eines Stromflusses zwischen der zweiten und einer dritten Elektrode der bereitgestellten Messsonde und Stoppen der Befüllung des Gefäßes bei Erreichen der zweiten Füllhöhe.

Durch die präzisiere Bestimmung der ersten und der zweiten Füllhöhe durch die bereitgestellte Messsonde erlaubt das Verfahren ein präziseres Abfüllen der Flüssigkeit.

Die zweite Füllgeschwindigkeit kann insbesondere geringer sein als die erste Füllgeschwindigkeit.

Die Schritte des oben beschriebenen Verfahrens können insbesondere in der angegebenen Reihenfolge durchgeführt werden, also aufeinanderfolgende Schritte sein.

Das oben beschriebene Verfahren zum Bestimmen eines Füllstandes einer Flüssigkeit in einem Gefäß und/oder das oben beschriebene Verfahren zum Abfüllen einer Flüssigkeit in ein Gefäß können außerdem ein Beaufschlagen oder Ansteuern der Messsonde mit einem hochfrequenten Wechselsignal umfassen. Durch die Verwendung eines solchen Signals kann eine lonenablagerung an den Elektroden vermieden oder wenigstens reduziert werden. Folglich kann ein Elektrolyseeffekt und eine damit einhergehende Verschlechterung der Messung vermieden oder wenigstens reduziert werden.

Unter einem hochfrequenten Wechselsignal kann hierbei insbesondere ein Wechselspannungssignal mit einer Frequenz von mehr als 1000 Hz verstanden werden. Das hochfrequente Wechselsignal kann beispielsweise ein Sinussignal umfassen oder sein. Mit anderen Worten kann das Wechselsignal sinusförmig sein. Die Frequenz des Wechselsignals kann zwischen 1000 Hz und 1500 Hz, insbesondere 1250 Hz, betragen.

Die Amplitude des hochfrequenten Wechselsignals kann abhängig von der Leitfähigkeit des Wechselsignals gewählt, insbesondere automatisch angepasst, werden. Die Amplitude kann beispielsweise im Bereich von 200 mV bis 1000 mV liegen.

Das hochfrequente Wechselsignal kann mittels eines Elektronikmoduls an die Messsonde angelegt werden. Insbesondere kann das Elektronikmodul wenigstens zwei oder wenigstens drei Ausgänge aufweisen, über die das hochfrequente Wechselsignal an die Messsonde angelegt werden kann. Im Fall von drei Ausgängen kann jeder Ausgang mit jeweils einer, insbesondere mit unterschiedlichen, Elektroden der Messsonde verbunden werden. Einer der Ausgänge, insbesondere derjenige, der im Betrieb der Messsonde mit der obersten Elektrode der Messsonde verbunden ist, kann dann auf Masse liegen. Das Wechselsignal kann dann über die zwei weiteren Ausgänge an die Messsonde angelegt werden.

Alternativ können nur zwei Ausgänge des Elektronikmoduls mit der Messsonde verbunden sein. In diesem Fall kann ein Ausgang und die damit verbundene Elektrode der Messsonde auf Masse liegen, während das hochfrequente Wechselsignal über den zweiten Ausgang an eine andere, mit diesem Ausgang verbundene, Elektrode der Messsonde angelegt wird. Die dritte Elektrode der Messsonde kann in diesem Fall über ein elektrisches Widerstandsnetzwerk mit dem ersten und dem zweiten Ausgang verbunden sein. Alternativ kann die dritte Elektrode der Messsonde nur mit dem Ausgang des Elektronikmoduls verbunden sein, der auf Masse liegt, insbesondere wobei die Elektrode über wenigstens einen elektrischen Widerstand mit dem Ausgang verbunden ist.

Das Widerstandsnetzwerk oder der wenigstens eine elektrische Widerstand können an die Leitfähigkeit der abzufüllenden Flüssigkeit angepasst werden. Dies kann beispielsweise über eine Parametrierung der erwarteten Leitfähigkeit der Flüssigkeit geschehen.

Die oben beschriebene Vorrichtung zum Bestimmen eines Füllstandes einer Flüssigkeit in einem Gefäß kann insbesondere ein derartiges Elektronikmodul zum Anlegen eines hochfrequenten Wechselsignals an die Messsonde umfassen.

Die Erfindung stellt außerdem eine Abfüllvorrichtung zum Abfüllen einer Flüssigkeit in ein Gefäß, insbesondere eine Flasche oder eine Dose, bereit, umfassend eine oben beschriebene Messsonde.

Weitere Merkmale und Vorteile werden nachfolgend anhand der beispielhaften Figuren erläutert. Dabei zeigt
- Figur 1: einen Querschnitt durch eine beispielhafte Messsonde;
- Figur 2: eine Illustration einer beispielhaften Messsonde beim Abfüllen einer Flüssigkeit in ein Gefäß;
- Figur 3: ein beispielhaftes System zum Abfüllen einer Flüssigkeit in Gefäße unter Verwendung einer beispielhaften Messsonde; und
- Figuren 4-6: beispielhafte Beschaltungsvarianten zum Beaufschlagen einer Messsonde mit einem hochfrequenten Wechselsignal.

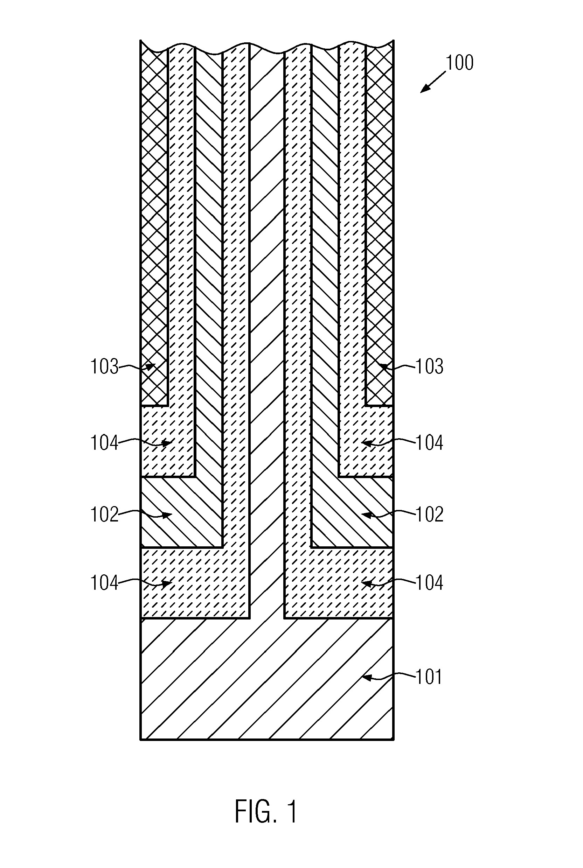

Figur 1 zeigt eine beispielhafte Messsonde 100 umfassend eine erste Elektrode 101, eine zweite Elektrode 102 und eine dritte Elektrode 103. Die drei Elektroden 101, 102, 103 werden durch Isolierschichten 104 elektrisch voneinander isoliert.

Die beispielhafte Messsonde 100 ist eine zylinderförmige, massive Stabsonde. Figur 1 zeigt einen Querschnitt entlang der Längsachse der Messsonde 100.

Die erste Elektrode 101 und die zweite Elektrode 102 sind teilweise im Inneren der Messsonde 100 angeordnet. Dies bedeutet, dass sich zwischen einem Teil der ersten Elektrode 101 bzw. der zweiten Elektrode 102 und der Oberfläche der Messsonde 100 wenigstens eine Isolierschicht 104 befindet. Entlang der Längsachse der Messsonde weisen die erste Elektrode 101 und die zweite Elektrode 102 im Inneren eine größere Längenausdehnung auf als an der Oberfläche der Messsonde.

Entlang der Längsachse der Messsonde sind die Elektroden 101, 102, 103 an der Oberfläche der Messsonde voneinander beabstandet angeordnet. Insbesondere umfasst jede der drei Elektroden 101, 102, 103 eine freiliegende, nach außen weisende Fläche. Diese Flächen sind entlang der Längsachse der Messsonde 100 beabstandet voneinander angeordnet.

Die Elektroden 101, 102, 103 sind aus Edelstahl 1.4404 gefertigt und werden aus Vollmaterial gedreht. Die endständige Elektrode 101 kann auch aus einem Draht entsprechenden Materials hergestellt werden, indem das untere Ende des Drahtes in eine Negativform gepresst wird, wodurch sie die geeignete abgerundete Form erhält. Ein einfaches Herstellverfahren für die Elektroden 102, 103 ist daneben das Biegen kleiner Edelstahlbleche zu entsprechend geformten Röhrchen, wobei diese zur Anpassung an die Isolierschichtgeometrie auch entsprechend gestaucht oder in Form verpresst werden können.

Die Isolierschichten 104 sind jeweils aus Halar-Rundstäben gefräst. Sie werden mit den vorgefertigten Elektroden verpresst. Ebenso ist möglich, die einzelnen Bauteile miteinander zu verkleben, wobei darauf zu achten ist, dass die Oberfläche der Messonde 100 glatt ausgebildet ist und zwischen den Bauteilen keine Spalten offen bleiben, die die Reinigbarkeit der Oberfläche erschweren. Ebenso ist möglich, die Isolierschichten 104 aus einem thermoverformbaren Kunststoff direkt zwischen die vorgefertigten Elektroden 101, 102, 103 zu gießen bzw. zu spritzen.

Die Messsonde 100 hat senkrecht zur Längsachse der Sonde einen kleineren Durchmesser als eine Mündung eines zu befüllenden Gefäßes. Z.B. hat die Messsonde 100 zur Bestimmung des Füllpegels in einer Flasche mit 28mm-Mündung einen Durchmesser von maximal 7mm. Dadurch ist die Messsonde 100 stabil und unempfindlich gegenüber mechanischen Einflüssen und lässt sich im Gegenzug sehr einfach herstellen.

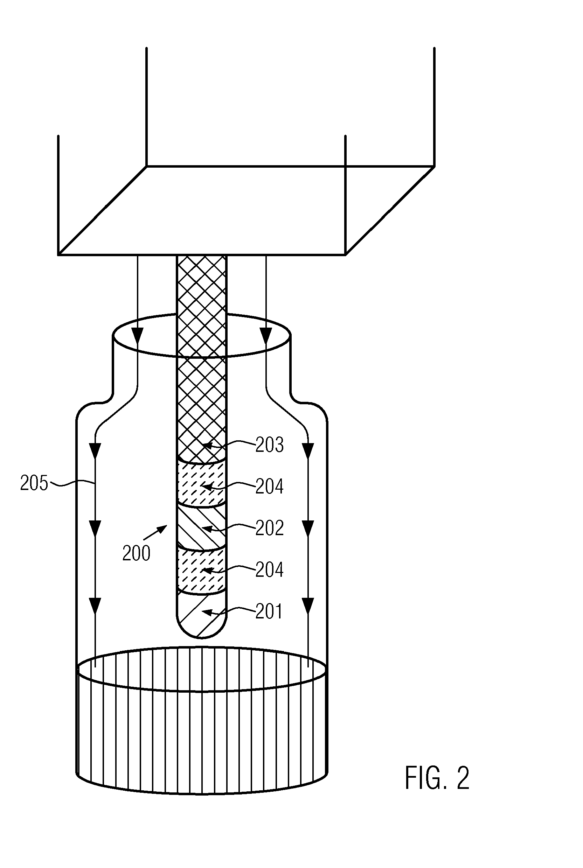

Figur 2 illustriert die Verwendung einer beispielhaften Messsonde 200 zum Bestimmen eines Füllstandes einer Flüssigkeit in einer Flasche beim Abfüllen der Flüssigkeit in die Flasche. Dazu wird die beispielhafte Messsonde 200 mit einem Füllelement verbunden und wenigstens teilweise in die zu füllende Flasche eingebracht. Die Flüssigkeit wird unter der Verwendung eines Drallkörpers an der inneren Flaschenoberfläche in die Flasche geleitet. Dabei entsteht an der inneren Flaschenoberfläche ein sogenannter Produktschirm 205.

Wenn der Flüssigkeitspegel die erste Elektrode 201 erreicht, kann es zu einem Stromfluss über den Produktschirm 205 zur Maschinenmasse kommen. Dieser Stromfluss kann prinzipiell von einer Auswerteelektronik erkannt und verarbeitet werden. Dadurch kann der Eintauchpunkt der Messsonde 200 in die Flüssigkeit bestimmt werden.

Wenn der steigende Flüssigkeitspegel die zweite Elektrode 202 erreicht, kommt es zu einem Stromfluss zwischen der ersten Elektrode 201 und der zweiten Elektrode 202. Dieser Stromfluss kann an einem Eingang eines Auswerteelementes bestimmt werden. Dieser Stromfluss ist dabei wesentlich größer als ein Stromfluss, der über den Produktschirm 205 zustande kommt. Daher kann dieser Stromfluss auch bei variierender Leitfähigkeit der Flüssigkeit präzise erkannt werden. Somit ist eine präzise Bestimmung einer ersten Füllhöhe möglich. Um eine möglichst präzise Füllung der Flasche zu erreichen, kann bei Erreichen der ersten Füllhöhe die Füllgeschwindigkeit reduziert werden.

Wenn der Flüssigkeitspegel der Flüssigkeit die dritte Elektrode 203 erreicht, kommt es zu einem weiteren Stromfluss zwischen der ersten oder zweiten Elektrode, 201 oder 202, und der dritten Elektrode 203, der an einem weiteren Eingang der Auswerteelektronik bestimmt werden kann. Sobald dieser Stromfluss bestimmt wurde, kann die Befüllung der Flasche gestoppt werden. Dadurch, dass das Stoppen der Abfüllung in der niedrigeren zweiten Füllgeschwindigkeit geschieht, ist der zu erwartende Nachlauf geringer als wenn mit der höheren ersten Füllgeschwindigkeit bis zum Erreichen der zweiten Elektrode 202 gefüllt worden wäre.

Durch die Verwendung der beispielhaften Messsonde 200 ist es mögliche sowohl den Umschaltepunkt zwischen der ersten und der zweiten Füllgeschwindigkeit als auch den Anhaltepunkt zum Stoppen der Füllung präzise zu bestimmen. Damit lässt sich eine Flasche präziser und effektiver füllen.

Zum Vergleich der Genauigkeit der Füllhöhenbestimmung über einen Stromfluss zwischen zwei Elektroden im Vergleich zu einer Bestimmung über einen Stromfluss über einen Produktschirm wurde folgender Versuch durchgeführt.

Der Füllversuch wurde mit einer Flasche und einem Füllelement durchgeführt. Es wurden zwei Messreihen mit jeweils fünfzehn Messungen in Folge angefertigt. Für die erste Messreihe wurde der Abschaltpunkt der Abfüllung anhand eines vollständigen Kurzschlusses über zwei Elektroden (entspricht dem Umschaltpunkt einer erfindungsgemäßen Messsonde) erkannt. Für die zweite Messreihe wurde der Abschaltpunkt über einen Stromfluss über einen Produktschirm erkannt (entspricht dem Umschaltpunkt einer bekannten Zweipotentialsonde). Gemessen wurde nach jeder Füllung der Kopfraum, also das Teilvolumen der Flasche, welches nach der Füllung frei, d.h. ohne Flüssigkeit, bleibt.

Die folgenden Tabellen stellen das Ergebnis dieser Messung dar.

| Messung | Kopfraum | | Messung | Kopfraum |
|---|---|---|---|---|
| Nr. | [mm] | | Nr. | [mm] |
| 1 | 93 | | 1 | 94,6 |
| 2 | 91,8 | | 2 | 92,6 |
| 3 | 91,8 | | 3 | 90,9 |
| 4 | 91,6 | | 4 | 91,4 |
| 5 | 92 | | 5 | 92,6 |
| 6 | 91 | | 6 | 90,2 |
| 7 | 91,4 | | 7 | 90,6 |
| 8 | 92,1 | | 8 | 91,3 |
| 9 | 91,8 | | 9 | 91,7 |
| 10 | 91,2 | | 10 | 92,5 |
| 11 | 90,5 | | 11 | 91,4 |
| 12 | 91,2 | | 12 | 93,4 |
| 13 | 92,3 | | 13 | 93,4 |
| 14 | 90 | | 14 | 92,9 |
| 15 | 91,1 | | 15 | 92,4 |
| Sigma | 0,737950831 | | Sigma | 1,197894979 |

Für die Kurzschlussabschaltung (der erfindungsgemäßen Messsonde) ergibt sich eine Standardabweichung des Kopfraumes von etwa 0,74 mm. Dies entspricht rechnerisch einem maximalen Toleranzband von +/- 2,22 mm.

Die Abschaltung über eine teilkontinuierliche Messung, d.h. über einen Stromfluss über den Produktschirm, erreicht eine Standardabweichung von 1,20 mm. Dies entspricht einem maximalen Toleranzband von +/- 3,6 mm.

Es ist zu erkennen, dass sich bei einer Kurzschlussmessung eine circa 38 %-Verbesserung hinsichtlich der Erkennungsgenauigkeit des Füllstandes ergibt.

Bei der Verwendung einer beispielhaften Messsonde 200 zum Abfüllen einer Flüssigkeit in ein Gefäß können folgende Parameter berücksichtigt werden.

Die Empfindlichkeit der Messsonde 200 kann entsprechend der Leitfähigkeit der Abfüllflüssigkeit eingestellt werden. Dies kann wie folgt durchgeführt werden:

Eine beispielhafte Flasche wird mit Abfüllflüssigkeit bis zu einer gewünschten Füllhöhe befüllt und dann in ein Füllelement eingebracht. Der Wert der Empfindlichkeit ist dann so einzustellen, dass der zurückgelieferte Sondenwert zwischen 240 und 250 Einheiten liegt. Der Sondenwert wird üblicherweise einheitenlos und normiert auf einen Wertebereich von 0 bis 255 zurückgegeben. Die Schaltschwellen, d.h. der zurückgelieferte Sondenwert bei dem eine Umschaltung zwischen erster und zweiter Füllgeschwindigkeit stattfindet sowie der zurückgelieferte Sondenwert bei dem eine Abschaltung der Füllung stattfindet, können auch von dem zur Einstellung der Empfindlichkeit zurückgelieferten Sondenwert bestimmt werden. Hierzu wird die Empfindlichkeit bei gleicher Sondenbedämpfung verändert, so dass dadurch der aktuell anliegende Sondenwert geändert wird. Um ein korrektes Abschalten bzw. Umschalten zu gewährleisten, müssen evtl. die Schaltschwellen angepasst werden.

Ein weiterer Parameter, der bei der Abfüllung unter Verwendung einer Messsonde berücksichtigt werden kann, ist eine Umschalteverzögerung nach Erkennung des Umschaltepunktes von schneller Füllung auf langsame Füllung. Dieser Parameter gibt die Verzögerungszeit nach dem Bestimmen der ersten Füllhöhe bis zur tatsächlichen Umschaltung von der ersten Füllgeschwindigkeit auf die zweite Füllgeschwindigkeit an.

Ein entsprechender Parameter gibt die Verzögerungszeit nach Erkennen der zweiten Füllhöhe bis zur tatsächlichen Abschaltung der Füllung an.

Direkt am Beginn der Füllung kann, während der Ausbildung des Produktschirmes 205, Flüssigkeit direkt an der Messsonde 200 entlanglaufen und diese kurzschließen. Eine Einschaltverzögerung zum Verzögern des Einschaltens der Auswerteelektronik kann verhindern, dass ein in diesem Zeitbereich festgestellter Stromfluss mit dem Erreichen einer Füllhöhe gleichgesetzt wird.

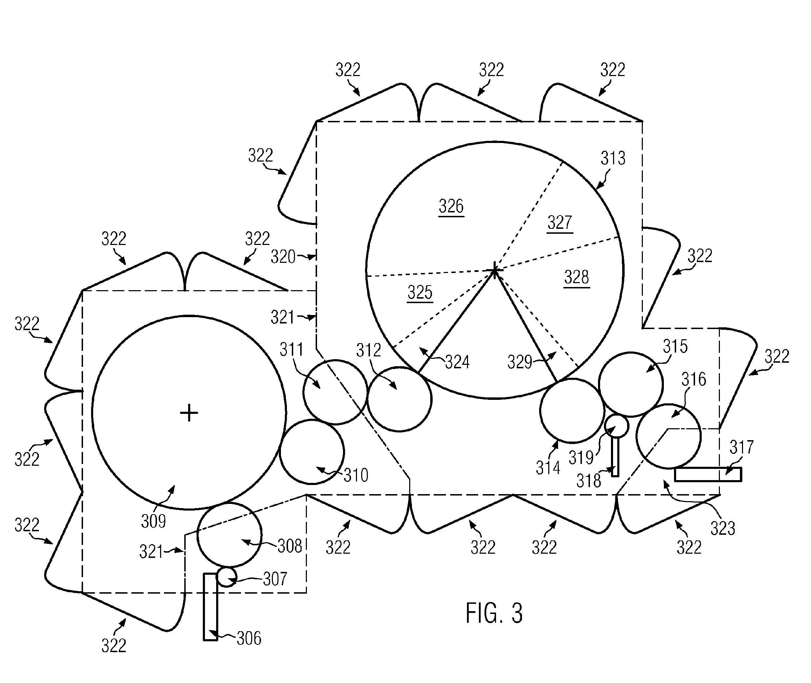

Figur 3 zeigt eine beispielhafte Abfüllanlage, die zum Abfüllen einer Flüssigkeit in ein Gefäß, insbesondere eine Flasche oder eine Dose, verwendet werden kann. In einer derartigen beispielhaften Abfüllanlage können die Abfüllelemente eine oben beschriebene Messsonde umfassen.

Insbesondere zeigt die Figur 3 einen Flascheneinlauf 306, einen Flascheneinteilstern 307 und einen Rinsereinlaufstern 308, über welchen beispielhafte Flaschen in den Rinser 309 zur Reinigung der Flaschen eingebracht werden. Über einen Rinserauslaufstern 310 und einen Transferstern 311 werden die beispielhaften Flaschen in einen Füllereinlaufstern 312 gebracht, über welchen die beispielhaften Flaschen in den Füller 313 zur Befüllung mit einer Füllflüssigkeit eingebracht werden. Über einen Füllerauslaufstern 314, einen Verschließer 315 und eine Verschließerauslaufstern/Absenkstern 316 können die gefüllten und verschlossenen Flaschen zu einem Transportband 317 gebracht werden.

Für den Verschließer 315 ist eine Verschlusszufuhr 318 und ein "Pick and Place Rad" 319 vorgesehen. Zum Schutz der Anlage ist eine Maschinenschutz- beziehungsweise Reinraumwand 320 vorgesehen. Eine optionale Trennwand 321 kann den Flascheneinlauf 306 vom Rinser 309 trennen. Über Türen 322 kann die Füllanlage beispielsweise für eine Bedienperson zugänglich gemacht werden. Im Bereich des Verschließerauslaufsterns/Absenksterns 316 kann eine optionale Auslaufschleuse 323 vorgesehen sein.

Beispielhafte Flaschen, welche im Bereich 324 des Füllers 313 angeordnet sind, werden an ein Füllelement angepresst. Im Bereich 325 findet ein Vorspannen, d.h. ein Beaufschlagen der Flaschen mit Druck direkt vor dem Befüllen, statt. Im Bereich 326 findet ein Befüllen der Flaschen mit einer ersten Füllgeschwindigkeit statt bis eine erste Füllhöhe unter Verwendung einer oben beschriebenen Messsonde bestimmt wird. Im darauffolgenden Abschnitt 327 werden die beispielhaften Flaschen mit einer zweiten Füllgeschwindigkeit befüllt, die insbesondere geringer ist als die erste Füllgeschwindigkeit. Nach Erreichen einer zweiten Füllhöhe wird die Befüllung gestoppt und Flaschen in einem Bereich 328 des Füllers 313 werden beruhigt und entlastet und im Bereich 329 abgesenkt und an den Füllerauslaufstern 314 übergeben.

An die Messsonde kann ein hochfrequentes Wechselsignal angelegt werden. Dadurch kann eine lonenablagerung an den Elektroden vermieden oder wenigstens reduziert werden. Das hochfrequente Wechselsignal kann beispielsweise ein Sinus-Signal mit 1250 Hz sein. Die Amplitude des Wechselsignals kann abhängig von der Leitfähigkeit des Wechselsignals gewählt, insbesondere automatisch angepasst, werden. Die Amplitude kann beispielsweise im Bereich von 200 mV bis 1000 mV liegen.

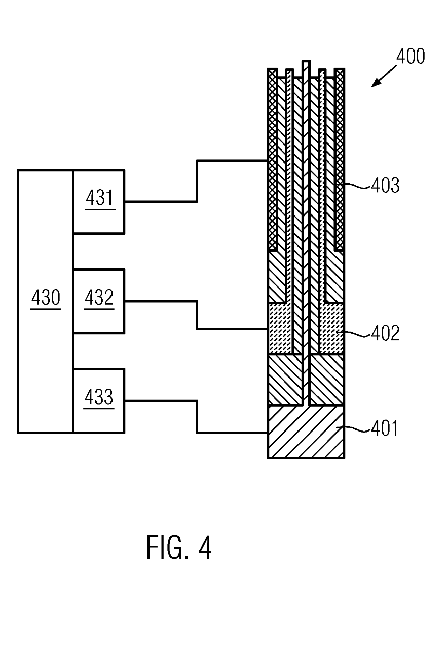

Figur 4 zeigt eine erste Beschaltungsvariante zum Anlegen eines hochfrequenten Wechselsignals an eine Messsonde 400. Dafür ist ein Elektronikmodul 430 vorgesehen mit drei Ausgängen 431, 432 und 433. Jeder der Ausgänge ist mit einer anderen Elektrode 401, 402 bzw. 403 der Messsonde 400 verbunden. Der erste Ausgang 431 liegt in diesem Beispiel auf Masse. Dieser Ausgang ist mit der im Betrieb obersten Elektrode 403 verbunden.

Die beiden anderen Ausgänge 432 und 433 werden verwendet, um das hochfrequente Wechselsignal an die Elektroden 402 bzw. 401 anzulegen. Die Ausgänge 432 und 433 können dabei, insbesondere auch zeitgleich, mit zwei Wechselsignalen unterschiedlicher Spannungshöhe beaufschlagt werden, damit ein Stromfluss bei Bedämpfung zwischen Elektrode 401 und 402 erkannt werden kann.

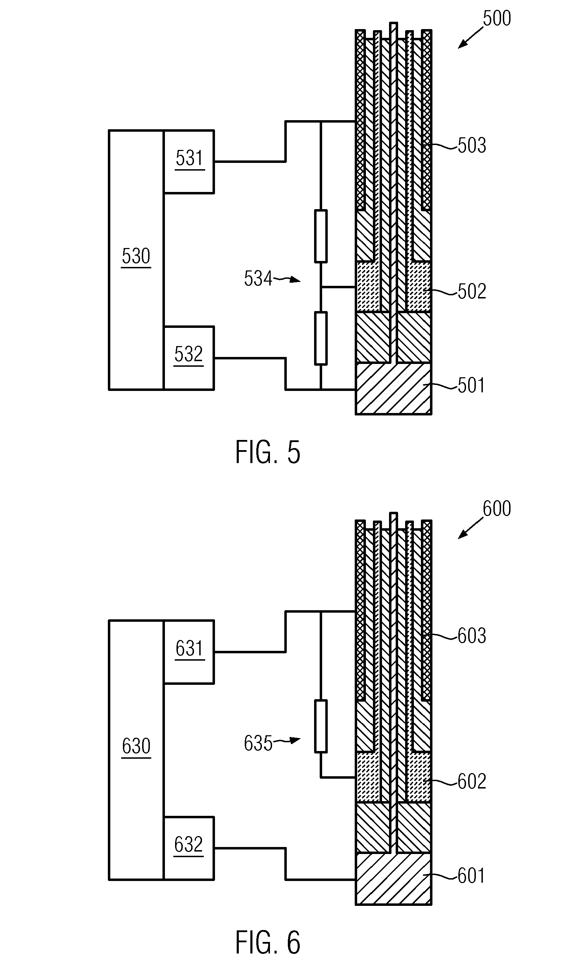

Figur 5 zeigt eine zweite Beschaltungsvariante zum Anlegen eines hochfrequenten Wechselsignals an eine Messsonde 500. Dafür ist ein Elektronikmodul 530 vorgesehen mit zwei Ausgängen 531 und 532, die mit zwei unterschiedlichen Elektroden 503 bzw. 501 der Messsonde 500 direkt verbunden sind. Mit der dritten Elektrode 502 der Messsonde 500 sind die Ausgänge 531 und 532 über ein Widerstandsnetzwerk 534 verbunden. Ausgang 631 liegt dabei auf Masse.

Figur 6 zeigt eine dritte Beschaltungsvariante zum Anlegen eines hochfrequenten Wechselsignals an eine Messsonde 600. Diese Beschaltungsvariante entspricht im Wesentlichen der zweiten Beschaltungsvariante aus Figur 5. Ausgang 631 liegt dabei wiederum auf Masse. Jedoch ist in diesem Beispiel nur der erste Ausgang 631 mit der Elektrode 602 über einen elektrischen Widerstand 635 verbunden. Der zweite Ausgang 632 ist dagegen nicht mit der Elektrode 602 verbunden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Messsonde (100; 200) zum Bestimmen eines Füllstandes einer Flüssigkeit in einem Gefäß, insbesondere einer Flasche oder einer Dose, umfassend:
wenigstens drei voneinander elektrisch isolierte, an der Oberfläche der Messsonde (100; 200) nach außen weisende Elektroden (101; 102; 103; 201; 202; 203),
wobei die Messsonde (100; 200) als massive Stabsonde ausgebildet ist.

2. Messsonde (100; 200) nach Anspruch 1, wobei die Elektroden (101; 102; 103; 201; 202; 203) durch Isolierschichten (104; 204) aus elektrisch isolierendem Material voneinander getrennt sind.

3. Messsonde (100; 200) nach einem der vorangegangenen Ansprüche, wobei wenigstens eine der Elektroden (101; 102; 103; 201; 202; 203) und/oder eine der Isolierschichten (104; 204) mittels Dünnschichttechnologie auf die Messsonde (100; 200) aufgebracht wurden.

4. Messsonde (100; 200) nach einem der vorangegangenen Ansprüche, wobei wenigstens zwei der Elektroden (101; 102; 201; 202) teilweise im Inneren der Messsonde (100; 200) angeordnet sind, wobei insbesondere die Ausdehnung der wenigstens zwei Elektroden (101; 102; 201; 202) in Richtung der Längsachse der Messsonde (100; 200) im Inneren größer ist als an der Oberfläche.

5. Messsonde (100; 200) nach einem der vorangegangenen Ansprüche, wobei die Elektroden (101; 102; 103; 201; 202; 203) an der Oberfläche der Messsonde (100; 200) entlang der Längsachse der Messsonde (100; 200) beabstandet voneinander angeordnet sind.

6. Vorrichtung zum Bestimmen eines Füllstandes einer Flüssigkeit in einem Gefäß, insbesondere einer Flasche oder einer Dose, umfassend:
eine Messsonde (100; 200) nach einem der vorangegangenen Ansprüche; und
ein Auswerteelement zum Bestimmen eines Stromflusses zwischen zwei der Elektroden (101; 102; 103; 201; 202; 203) der Messsonde (100; 200).

7. Vorrichtung nach Anspruch 6, wobei das Auswerteelement derart konfiguriert ist, dass es einen elektrischen Strom zwischen je zwei der Elektroden (101; 102; 103; 201; 202; 203) der Messsonde (100; 200) bestimmen kann.

8. Verfahren zum Abfüllen einer Flüssigkeit in ein Gefäß, insbesondere eine Flasche oder eine Dose, wobei eine Abfüllanlage umfassend eine Vorrichtung nach Anspruch 6 oder 7 bereitgestellt wird, umfassend die Schritte:
Befüllen des Gefäßes mit einer ersten Füllgeschwindigkeit;
Bestimmen einer ersten Füllhöhe umfassend Bestimmen eines Stromflusses zwischen einer ersten und einer zweiten Elektrode (101; 102; 103; 201; 202; 203) der bereitgestellten Messsonde (100; 200);
Verändern der Füllgeschwindigkeit zu einer zweiten Füllgeschwindigkeit bei Erreichen der ersten Füllhöhe;
Bestimmen einer zweiten Füllhöhe umfassend Bestimmen eines Stromflusses zwischen der zweiten und einer dritten Elektrode (101; 102; 103; 201; 202; 203) der bereitgestellten Messsonde (100; 200); und
Stoppen der Befüllung des Gefäßes bei Erreichen der zweiten Füllhöhe.

9. Verfahren nach Anspruch 8, wobei wenigstens zwei der Elektroden (101; 102; 103; 201; 202; 203) der Messsonde (100; 200) voneinander unterschiedliche elektrische Potentiale aufweisen.

10. Verfahren nach Anspruch 8 oder 9, außerdem umfassend Beaufschlagen oder Ansteuern der Messsonde mit einem hochfrequenten Wechselsignal.

11. Verfahren nach Anspruch 10, wobei das hochfrequente Wechselsignal sinusförmig ist.

12. Verfahren nach einem der Ansprüche 8-11, wobei das hochfrequente Wechselsignal eine Frequenz zwischen 1000 Hz und 1500 Hz, insbesondere 1250 Hz, aufweist.

13. Verfahren nach einem der Ansprüche 8-12, wobei die Amplitude des hochfrequenten Wechselsignals abhängig von der Leitfähigkeit des Wechselsignals gewählt, insbesondere automatisch angepasst, wird.
